# EUROPEAN PATENT APPLICATION

(11) **EP 4 843 391 A1**
(43) Date of publication of application: **25.11.2026**
(21) Application number: 25177440.2
(22) Date of filing: 19.05.2025
(51) Int. Cl.: A21C 3/02

(54) **MECHANISM FOR DOUGH SHEETER MACHINE**

(71) Applicant: Lozev, Mario, 6400 Dimitrovgrad Haskovo (BG); Lozev, Lachezar, 6400 Dimitrovgrad Haskovo (BG)
(72) Inventor: Lozev, Mario, 6400 Dimitrovgrad (BG); Lozev, Lachezar, 6400 Dimitrovgrad (BG)

(57) **Abstract**

This invention relates to improvements in the board driving mechanism for dough sheeter machine, used for processing dough in food preparation. The novel mechanism comprises an optimized dough sheeter machine which includes bottom rotating shaft (2) equipped with a spur gear (5), a board (4) with a rack gear (5) at its base, an electric motor (23) located below the board, used to drive the board, upper rotation roller shaft (1) and lower rotation shaft (2), a control panel with joystick switch (60) for controlling the board movement and a foldable supportive system surface with side panels (8), railings (70) and bearings (7).

## Description

### Technical field to which invention relates

The present invention relates to a dough sheeter machine, and more particular to the electric driven board, board sliding mechanism and machine foldable construction.

### Indication of background art

Dough sheeter machines are commonly used in kitchens to prepare dough for a variety of baked goods made from laminated dough. Traditional dough sheeters typically have two rollers and the dough passes between them, gradually thinning it into a sheet and some feature also belts that distribute the sheeted dough. However, these machines are usually bulky, heavy and difficult to store. Other method for rolling out dough is to use two rotating rollers and one board between them. This technique is very famous in etching presses machines and slab roller press machines. This technique uses the pressure between the two rollers to drive board between the rollers. The friction between the rollers and the sliding board is sufficient when a slab is used or a piece for etching due to stiffness of the material, they engage very well with the board therefore a very good sliding of the board is observed. However when a dough is used in this method, the end result would not be as desired- evenly stretched and laminated dough. This is because of the softness of the dough. Due to that the two rollers cannot apply a sufficient pressure to the board in order to slide it in the direction of the rotating rollers. This leads to uneven dough distribution and lamination, as the board moves erratically.

### Technical problem to be solved

### Problem with the machine.

The sliding board exhibits inconsistent movement and lacks of sufficient power to slide, leading to non-uniform dough thickness and an inability to sheet or roll out the dough correctly. This issue disrupts the production process and compromises the quality of the final product.

### Disclosure of invention

The present invention provides a novel dough sheeter machine mechanism with a unique driving structure, driven with an electric motor. This mechanism applies for machine which comprises a movable bidirectional sliding board with shaped gear rack at its base, a single upper rotation shaft with a rolling pin attached to it, a bottom shaft with a spur gear, electric motor with pinion gear. To drive the mechanism an electric motor is located under the board as is connected via gear module to the bottom rotation shaft. The mechanism also features a foldable design for easy storage compromising a supportive system with side panels railings and bearings that ensures the sliding board moves smoothly and steadily.

The upper shaft has a roller pin attached to it, it has smooth, flat surface on which the dough is sheeted. The board is positioned below the upper rotation roller shaft and is configured to move back and forth along the machine's length. The spur gear is mounted on the lower shaft. The rotating of the bottom shaft, engages with upper shaft as a gear set with two spur gears. The bottom of the board is made in the shape of a rack gear along the length of the board meshing with the spur gear located at the bottom shaft and act as a transmission, in order to drive the slide the board. The electric motor is located below the board for saving space and for driving the mechanism. The electric motor engages with the lower rotation shaft as a gear set with two spur gears allowing driving the shaft and therefore the whole mechanism including the board and the upper roller. During bidirectional linear translation of the board, the dough substrate is subjected to compressive forces against a rotating roller, thereby effecting its lamination into a sheet of reduced and uniform thickness. The board's translational motion is facilitated by a dedicated support and guidance mechanism. This mechanism incorporates bilaterally positioned guide rails, upon which bearing assemblies are mounted. These bearings interface with the board to ensure low-friction, precise movement. The board transport mechanism comprises a transport surface configured to support and guide a board. Affixed to this transport surface are a plurality of parallel guide rails, oriented to direct the movement of the board along a predetermined path. Notably, the aforementioned guide rails are structurally integrated with collapsible lateral chassis panels.

These panels likely contribute to the machine's overall framework and may offer configurability or enhanced compactness when folded. A plurality of bearings, fixedly attached to the the guide rails are acting as a carrier and supporting the board. These bearings engage with the board, allowing for a smooth and controlled rolling traversal of the board along the transport surface. This entire support and guidance structure, consisting of the transport surface, the plurality of guide rails structurally integrated with collapsible lateral chassis panels, and the associated plurality of bearings, is implemented on one lateral side of the apparatus. A substantially identical support and guidance structure is mirrored on the opposing lateral side of the apparatus to provide balanced and stable transport of the board.

### Brief description of drawings

Fig. 1 is a perspective view of dough sheeter machine in accordance with the preferred embodiment of the present invention.
Fig. 2 is a perspective view showing the dough sheeter machine in a folded configuration in accordance with the preferred embodiment of the present invention as shown in Fig.1
Fig. 3 is a side sectional view of the dough sheeter machine main frame in accordance with the preferred embodiment of the present invention Fig. 1.
Fig. 4 is a bottom cross-sectional view of the dough sheeter machine mechanism as shown in Fig. 1.
Fig. 5 is a perspective sectional view of the dough sheeter machine mechanism as shown in Fig. 1.
Fig. 6 is a rear sectional view of the dough sheeter machine mechanism as shown in Fig.1

### Description of at least one way of carrying out the invention

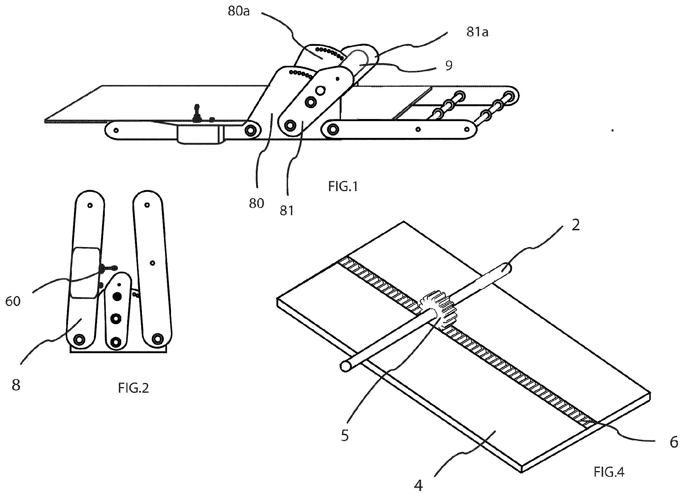

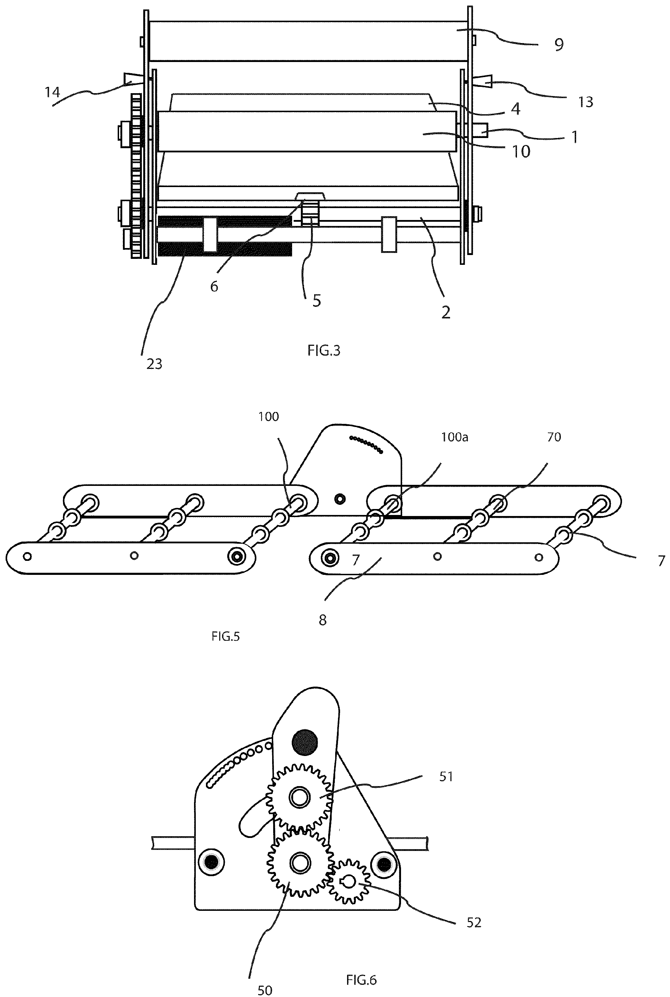

Referring to the drawings and initially to Figs. 1-6, a mechanism for dough sheeter machine in accordance with the preferred embodiment of the present invention comprises a superior support bar (9) is affixed via bolts to the shafts carrier plates, designated as (81) and (81a), positioned bilaterally on the machine's structure.

The rotational motion of the two shafts (1) and (2) is synchronized through a transmission module. This module comprises two spur gears: spur gear (50), which is rigidly coupled to the lower rotating shaft, and spur gear (51), which is similarly fixed to the upper rotating shaft. The upper shaft (1) is equipped with an attached rolling pin (10). Concurrently, the lower shaft (2) features an attached spur gear (5). It is imperative that the diameter of the rolling pin (10) on the upper shaft (1) is appropriately dimensioned to correspond with the desired thickness of the material (e.g., dough) being processed, thereby ensuring the production of a sheet of the specified thickness. A roller assembly comprising an upper shaft (1) and a lower shaft (2) is connected via carrier plates (81) and (81a). The roller assembly is configured to rotate through a full 360 degrees around the axis associated with shaft 2. This rotational capability allows the assembly to be moved to various predetermined positions. Indexing pins (14) and (14a) are provided to secure the assembly firmly in a selected rotational position. The specific rotational position chosen directly determines the distance, or gap, between the board and the upper roller, which in turn controls the extent to which the dough thickness is reduced as it passes through.

A detachable sliding board (4) is integrated into the machine, primarily supported by plurality of bearings (7). These bearings are affixed to two guide rails (100) and (100a). Said rails, (100) and (100a), are situated adjacent to each side of the lower rotation shaft. Their function is to maintain the stability of the sliding board (4) while facilitating its linear motion. The guide rails (100) and (100a) are mechanically coupled to the main machine side panel frames (80) and (80a), through shaft collars, which also constitute integral components of the machine's structural frame. The entire mechanism features a foldable transport surface configured to support a board and to be folded to safe space. This frame consists of additional rails (70) with bearings (7) mounted over each rail. The bearings are held in place on the rails via press fit. The rails are attached to the foldable lateral panels (8) using bolts.

The dimensions of the rails are all the same and correspond to the width dimensions of the board, including the width dimensions of the the main machine side panel frames, (80) and (80a). A row of parallel guide rails (70) comprises between two and four rows depending of board length affixed. Each guide rail has rows of bearings (7) comprises between two and four bearings depending of board width. This support and guidance assembly, including the transport surface, the guide rails structurally integrated with foldable lateral panels (8), and the bearings, is located on one lateral side of the machine; and wherein a second support and guidance assembly, substantially identical to the first support and guidance assembly, is located on an opposing lateral side of the apparatus. The transport surface, positioned on both lateral sides of the machine, is coupled via the foldable lateral panels (8) to the main frame rails (100) and (100a) of the machine utilizing shaft collars, thereby enabling the entire transport surface to be folded.

The bottom of the board is shaped as a rack gear (5) along the length of the board (4). The rack gear on the board is designed to mesh perfectly with the gear (3) on the lower rotation shaft (5), creating a mechanism that transmits power. The distance between the board and the lower shaft (2) is set according to the size of this gear module in this mechanism. The electric motor (23) is held in place as it is attached via bolts to the the main machine side panel frame (80). Positioned below the board, the electric motor (23) resides between the lower shaft (2) and one of the guide rails (100) or (100a). A gear module (52) is attached to the electric motor shaft, which transmits the motor's rotation to the lower shaft, thus driving the mechanism. The motor is controlled by a joystick controller. The joystick controller is placed in enclosure box. The enclosure itself is held in place via bolts to the foldable lateral panel (8) of the machine

## Claims

1. A dough sheeter machine comprising a frame, two rotation roller shafts (1) and (2), a board (4) positioned between them characterized with:
board (4) with rack gear (6) at its base positioned above the bottom shaft (2) and below the upper shaft (1);
a spur gear (5) mounted on a lower rotation shaft (2);
the bottom of the board shaped in the shape of a rack gear (6), in order to interact as a transmission with the spur gear (5) located on the lower rotation shaft;
a driving arrangement between the lower shaft spur gear and the board rack gear to drive the board;
a foldable support system, comprising a pair of substantially identical support surfaces, each of the support surfaces being movably mounted on guide rails (100, 100a); guide rails (70) integrated with the foldable lateral panels (8) on opposing sides of the machine; and bearings (7) fixed onto the guide rails (70) facilitating low-friction and precise board movement.
an electric motor (23) mounted below the board (4), on one of the main frames of the machine;
control panel featuring joystick switch, to control board movement;

2. A dough sheeter machine mechanism in accordance with claim 1 wherein:
the rotation bottom shaft (2) has two spur gears mounted on it, the one (5) is engaging with the rack gear (6) located on the board (4) and the other (50) engaging with spur gear (51) of the upper rotation roller shaft (1) and spur gear fixed on the electric motor (23) shaft.

3. A dough sheeter machine mechanism in accordance with claim 1 wherein:
an electric motor (23) is located below the board, next to the lower rotation shaft (2) and connected with spur gear (52) to the lower rotation shaft spur gear (50) in a gear module transmission.

4. A dough sheeter mechanism in accordance with claim 1, wherein a joystick switch (60) configured to control the electric motor (23) is mounted on the foldable side panel (8).

5. A dough sheeter machine mechanism in accordance with claim 1 wherein:
the board (4) has a rack gear (6) which is along the length of the board (4) and which is engaging with the spur gear (5) located on rotation shaft (2)

6. The dough sheeter machine mechanism in accordance with claim 1, wherein: a first support and guidance assembly is located on a first lateral side of the machine, and a second support and guidance assembly, substantially identical to the first support and guidance assembly, is located on a second, opposing lateral side of the machine; wherein each of the first and second support and guidance assemblies comprises: a foldable transport surface configured to support a board (4); rows of parallel guide rails (70) comprising between two and four rows, the guide rails affixed and structurally integrated with lateral chassis panels (8); and rows of bearings (7) comprising between two and four bearings affixed to each of the guide rails (70) to facilitate rolling movement of the board (4) along the transport surface; and wherein each lateral chassis panel (8) is pivotably coupled to a corresponding one of the main frame rails (100, 100a) of the machine utilizing at least one shaft collar, thereby enabling each of the first and second support and guidance assemblies to pivot relative to the main frame rails between an extended position and a folded position.
